# EUROPEAN PATENT APPLICATION

(11) **EP 4 197 973 A1**
(43) Date of publication of application: **21.06.2023**
(21) Application number: 21857063.8
(22) Date of filing: 17.08.2021
(51) Int. Cl.: C01G 33/00, B02C 19/06, B02C 17/00, B02C 7/00

(54) **PREPARATION OF NIOBIUM NANOPARTICLES, USE AND METHOD FOR OBTAINING SAME**

(30) Priority: 17.08.2020 BR 102020016774
(71) Applicant: Fras-Le S.A., 95115-550 Caxias do Sul (BR)
(72) Inventor: CARDOSO TEIXEIRA DE ALBUQUERQUE FERREIRA, Cesar Augusto, 95020-472 Caxias do Sul (BR); BOARETTO, Joel, 95032-180 Caxias do Sul (BR); DUDLEY CRUZ, Robinson Carlos, 95020-472 Caxias do Sul (BR)
(74) Representative: Grünecker Patent- und Rechtsanwälte PartG mbB
(86) International application number: PCT/BR2021/050346
(87) International publication number: WO 2022/036427

(57) **Abstract**

The present invention describes a preparation of niobium nanoparticles, its use, and a process for obtaining it by comminution, that is, a top-down process. The preparation of nanoparticles of the invention solves these and other problems and has peculiar composition, purity, granulometric profile and specific surface area, being useful in a variety of applications. The invention also discloses a process for obtaining nanoparticles of mineral species containing Niobium, through controlled comminution and without chemical reactions or contamination with reagents typical of the synthesis of nanoparticles. The present invention, in wide contrast to the state of the art, provides the large-scale production of niobium pentoxide nanoparticles with high purity, determined granulometric profile and very high specific surface area, enabling its use in practice in several industrial applications.

## Description

### Field of the Invention

The present invention is in the field of materials engineering and nanotechnology. More specifically, the invention describes a preparation of niobium nanoparticles, its use, and a process for obtaining it by comminution, that is, a top-down process. The invention is an achievement hitherto considered unattainable, as for decades efforts were made to obtain high purity niobium pentoxide nanoparticles in large quantities without success. The preparation of nanoparticles of the invention solves these and other problems and has peculiar composition, purity, granulometric profile and specific surface area, being useful in a variety of applications. The invention also discloses a process for obtaining nanoparticles of mineral species containing Niobium, through controlled comminution and without chemical reactions or contamination with reagents typical of the synthesis of nanoparticles. The present invention, in wide contrast to the state of the art, provides the large-scale production of high-purity niobium pentoxide nanoparticles, determined granulometric profile and very high specific surface area, enabling its use in practice in several industrial applications.

### Background of the Invention

Particles of various materials, and in particular particles of ceramic materials, including ceramic oxides, are of great use in a variety of applications. In this segment, the so-called Post Metallurgy has been the object of study by many research groups and companies involved in the development of special materials, with the size limit or the particle size distribution profile being an important factor in the properties of such materials.

Of special relevance in the context of the present invention, the difference between: (i) preparations containing a fraction of nanoparticles among the other particles; (ii) preparations containing particles predominantly or entirely in the nanometer granulometric range; and (iii) preparations of nanoparticles predominantly or entirely in the nanometer granulometric range with a defined granulometric distribution profile is highlighted. The present invention provides these last two.

In this context, recent literature by one of the present inventors (Powder Technology 383 (2021) 348-355 - Powder grinding and nano-particle sizing: sound, light and illumination)) shows how important it is to know about the techniques for measuring the particles size for a correct statement about such magnitude, particularly in the nano dimension. In the nano dimension, conventional measurement processes (EAS, electro acoustic spectroscopy and DLS dynamic light scattering) are susceptible to errors when based on the volume of particles, techniques based on the number of particles and also based on their specific surface area are the most adequate in this dimension.

Niobium particle preparations may eventually contain small fractions of nanoparticles, but the predominance of much larger particles size, in the range of micrometers/microns, prevents the characterization of such preparations as actual nanoparticle preparations. In addition, it is known that the behavior of materials in the nanoscale changes substantially and therefore, the availability on a large scale and with high purity of a preparation containing niobium particles predominantly or entirely in the nanometer range and with high purity is highly desirable, without contamination typical of synthesis processes. The present invention solves these and other technical problems.

Ceramic oxides, in particular Niobium pentoxide, have been considered in various applications due to the peculiar properties of Niobium, an element that is largely produced in Brazil. Despite the fact that Brazil is one of the world leaders in Niobium production and that there is intense research activity in this important material, for decades it has been tried to obtain preparations of Niobium nanoparticles predominantly or entirely in the range of nanoparticles, on a large scale and with high purity, unsuccessfully. The present invention solves these and other technical problems.

The literature includes examples of synthesis methods of nanoparticles containing Niobium, in processes called bottom-up. However, being bottom-up or synthesis methods, such processes involve chemical reactions, reagents and products, so that the product obtained normally contains a lot of contamination with residues of inputs or reaction by-products.

Furthermore, nanoparticles obtained by bottom-up processes are limited to certain chemical species that are reaction products. In addition, these processes are not technically and/or economically viable on large scales, which are some of the reasons why no preparation of niobium nanoparticles that is stable, pure and with granulometric distribution predominantly or entirely within the nanometer range, available in industrial scale. The present invention solves these and other technical problems.

The methods of grinding/comminuting/spraying transition metals usually aim to increase the specific surface area and enable various industrial uses. In the case of Niobium or materials containing Niobium, especially in the case of Niobium pentoxide, the known methods are limited to obtaining particles with granulometry in the range of micrometers, not being known to the present inventors until the filing date of this patent application milling methods that provide obtaining preparations entirely containing nanoparticles.

Niobium has a higher dielectric constant than some other transition metals, which makes it a very useful material in electronic components, such as capacitors for example. However, obtaining metallic niobium powders by grinding requires the use of liquid dispersion media, and the contact of niobium powder with the dispersion medium and/or the heating generated by grinding causes the adsorption of oxygen present in the adsorption medium to niobium hydride, and the formation of a niobium oxide, which impairs the LC value (inductor/capacitor or inductance/capacitance) causes a large dispersion of the LC value, impairing the reliability of the material for use in capacitors and/or other components electronics. Furthermore, until the present invention, obtaining predominantly or entirely nanometric particles of niobium and niobium pentoxide by milling (top-down process) was a challenge considered technically impossible, having been the object of frustrated attempts for decades. The present invention solves these and other technical problems.

In the search for the state of the art in scientific and patent literature, the following documents related to the subject were found:

Patent PI 0601929-3, granted to the Institute Militar de Engenharia and extinct, discloses the obtainment of homogeneous mixtures of niobium oxides in alumina, on a nanometric scale, using the sol-gel technique. Said process obtains mixed oxides of Nb₂O₅ in Al₂O₃, in aqueous medium, by the sol-gel technique, using acetylacetone to control the hydrolysis and condensation rates of this transition metal, in order to obtain nanometric particles of these mixed oxides through the reaction.

Patent application JP-A-10-242004 discloses a technique of partial nitriding of a Niobium powder to increase the LC value. It does not disclose a niobium pentoxide nanoparticle preparation like the present invention.

US patent 4,084,965 discloses obtaining a Niobium powder (also referred to as Columbium powder) with a particle size of 5.1 microns. Said powder is obtained by hydrogenating and grinding a niobium ingot, the grinding being assisted by the small amount addition of a phosphorus-containing material (between 5 and 600ppm of elemental phosphorus), preferably in the form of a liquid to facilitate mixing. It does not disclose a niobium pentoxide nanoparticle preparation like the present invention.

Patent application US 2004/0168548 discloses a process for obtaining a niobium powder with a granulometry range from 10 to 500 microns. The process involves milling and aims to obtain a niobium powder for use in capacitors. In said process, niobium hydrides or niobium hydride alloys, in the presence of a dispersion medium, are milled at a temperature of -200 to 30°C. The dispersion medium used is selected from water, an organic solvent, or a liquefied gas. Dehydrogenation of niobium hydride powder or niobium hydride alloy powder is done at a temperature of 100 to 1000°C after grinding. The characteristics of the niobium powder obtained are: specific surface area from 0.5 to 40 m²/g; density from 0.5 to 4 g/mL; peak pore size from 0.01 to 7 microns; oxygen content less than or equal to 3 wt%. In said process, it is undesirable for the mean particle size of the granulated powder to be less than 10 microns, as the powder reduces the efficiency of the process and impairs the fluidity of the material. A niobium pentoxide nanoparticle preparation like the present invention is not disclosed.

Brazilian patent application PI 0401882-6, filed by CBMM and shelved, discloses a process for producing metallic Niobium and Tantalum powder with high chemical purity, high surface area, adequate morphology and porosity, and low apparent density. Said process comprises the steps of: obtaining a fine powder; surface oxidation in a controlled manner; reduction of this oxide layer with alkali or alkaline earth metals in a molten salt bath, or within a molten salt mixture; dissolution and leaching of the formed cake; filtering, washing and drying of the obtained product. It does not disclose a niobium pentoxide nanoparticle preparation like the present invention.

Brazilian patent PI 0105773-1, granted to CBMM, discloses a process for the production of Nb-Zr alloy powder, containing 0.1% to 10% of Zirconium. Said process comprises the hydridation, milling and dehydridation of Niobium-Zirconium (Nb-Zr) alloys to produce powder with controlled levels of impurities. It does not disclose a niobium pentoxide nanoparticle preparation like the present invention.

Brazilian patent application PI 0303252-9, filed by IPT/SP, discloses a process for the production of Niobium Monoxide (NbO) powder of high purity, high specific surface, controlled oxygen and nitrogen contents, appropriate morphology and adequate porosity to be used in the manufacture of capacitors. Said process is characterized by two stages of reduction of Niobium pentoxide (Nb₂O₅), the first stage of reduction of Niobium pentoxide (Nb₂O₅) to Niobium dioxide (NbO₂) from 0.3 to 0.6 mm in diameter, conducted by a reducing gas, and the second stage comprising obtaining Niobium monoxide (NbO) through a collector material under suitable conditions of temperature and time for the formation of NbO. NbO particles are large in size compared to the nano scale. It does not disclose a niobium pentoxide nanoparticle preparation like the present invention.

Brazilian patent application PI 0402611-0, filed by the IPT/SP and rejected, discloses a process for the production of Niobium Monoxide (NbO) powder of high purity, high specific surface, controlled oxygen and nitrogen contents, appropriate morphology and adequate porosity to be used in the manufacture of capacitors. Said process is characterized by two stages of reduction of niobium pentoxide (Nb₂O₅), the first stage of reduction of niobium pentoxide (Nb₂O₅) to niobium dioxide (NbO₂) conducted by a reducing gas, and the second stage comprises obtaining of niobium monoxide (NbO) through the total or partial transfer of oxygen, referring to the transformation of NbO₂ into NbO, to a fine powder of metallic niobium (Nb) with morphology and physical characteristics similar to that of NbO₂. It does not disclose a niobium pentoxide nanoparticle preparation like the present invention.

Brazilian patent PI 0106058-9, filled by CBMM and transferred to IPT/SP, discloses a process for the production of high purity niobium powder, high specific surface and controlled oxygen levels. Said process comprises a single reduction step of niobates of alkaline or alkaline earth metals (MeₓNbO_{y}, wherein Me is the alkaline or alkaline earth metal, x=0.5 to 3 and y=2 to 4) with a metal of the same nature followed by an acid leaching/washing step to remove alkali or alkaline earth metal oxides (or excess alkali or alkaline earth metal used in the reduction) present in the final product. The patent also protects the niobium powder thus obtained. It does not disclose a niobium pentoxide nanoparticle preparation like the present invention.

Brazilian patent application BR 112020014972-1 (=WO2019145298), filed by Evonik Operations GMBH, discloses compositions of polymeric inorganic nanoparticles and processes for preparation thereof. The nanoparticles disclosed in said document are of a metal chalcogenide containing Sulphur, Selenium, Tellurium or Oxygen and a polymer selected from several types of polymers, including acrylates, acids, halides or esters, and are intended to be used as a lubricant. It does not disclose a niobium pentoxide nanoparticle preparation like the present invention.

Patent application BR 102017017416-6, filed by UFRN, discloses an iron niobate synthesis route via high-energy milling. Said document discloses the synthesis of iron niobate (FeNbO₄) from the mechanical grinding (wet process) of niobium pentoxide (Nb₂O₅), metallic iron (α-Fe) in mass percentage amounts between 55% and 65%, 20% and 30%, and 10% and 20%, respectively, distilled water (H₂O), with rotation between 100 and 500 rpm and subsequent heat treatment between 1000 and 1500°C, for 1 to 5 hours. The product obtained contains two phases: 97.82% iron niobate and 2.18% hematite (α-Fe₂O₃). It does not disclose a niobium pentoxide nanoparticle preparation like the present invention.

Patents PI0110333-4 and PI0206094-9, granted to Showa Denko KK of Japan and both extinct, disclose a Niobium powder and a sintered body containing said powder. The focus of said documents is the production of capacitors, the inventors having discovered that controlling the nitrogen concentration is one of the keys to obtaining a good performance capacitor. In said documents, the niobium powders used are micrometric (up to 1000 µm) and obtained from ingots and a jet mill, and have a surface area of 0.5 to 40 m²/g. It does not disclose a niobium pentoxide nanoparticle preparation like the present invention.

Patent application PI 0114919-9, filed by Showa Denko and shelved, discloses a capacitor powder containing Niobium. Said powder is hydrogenated and at least partially nitrided niobium. Examples include feeding niobium metal particles with dimensions from 0.1 to 5 mm in diameter to a reaction tower into which a gas for halogenation is fed. The niobium halide powder obtained can be reduced with hydrogen gas forming a cluster with a specific surface area from 4 to 30 m²/g, being used to sinter a useful body for the preparation of a capacitor. It does not disclose a niobium pentoxide nanoparticle preparation like the present invention.

US patent US 6,375,704 B1, to Cabot Corp., discloses a niobium powder preparation and a process for preparing niobium powder flakes for use in capacitors. Said process comprises grinding Niobium chips to form flakes and then subjecting the flake obtained to a deoxidation step, preferably with magnesium. It does not disclose a niobium pentoxide nanoparticle preparation like the present invention.

Patent application PI0401114-7, filed by CBMM and shelved, discloses a Niobium powder (pentoxide or monoxide) with a controlled amount of Vanadium, obtained by co-precipitation. The specific surface area of Niobium pentoxide or Niobium monoxide in said document is between 0.4 m²/g and 30.0 m²/g. It discloses a spongy form containing Niobium oxide and does not disclose a nanoparticle preparation of Niobium pentoxide like the present invention.

Patent application PI0508759-7, filed by Mitsui Mining Ltd, and shelved, discloses a niobium oxide for use in capacitors, and a process for obtaining it. In said document, a low oxidation Niobium oxide is disclosed, obtained from a Niobium oxide with a high oxidation number, the product obtained (NbO) having a mean particle size d50 of 2 microns and a specific surface area (value BET) from 2.0 m²/g to 50.0 m²/g. The production method comprises the dry reduction of Niobium Pentoxide to produce Niobium Monoxide in two steps gradually. At gradual reduction, it is preferred that a carbon-containing reducing agent is used in at least one of the two steps, and the environment temperature and pressure is maintained within a predetermined range in each of the steps. It does not disclose a niobium pentoxide nanoparticle preparation like the present invention.

Patent application PI 0711243-2, filed by Mitsui Mining Ltd. and shelved, discloses a porous structure Niobium monoxide for use in capacitors. In said document, it is disclosed that Niobium monoxide has a specific surface area (BET value) of 10.7 m²/g. It does not disclose a niobium pentoxide nanoparticle preparation like the present invention.

US patent application US 2009/0256014A1 discloses a niobium hydride milling process with a milling aid of density 2 at 3.6 g/cm³ and a fracture hardness value of 1.5 MPa.m^{1/2} or more, such as silicon nitride balls. It does not disclose a niobium pentoxide nanoparticle preparation like the present invention.

Chinese patent CN 100381234C, from Cabot Corp and family member of Brazilian patent application PI0009107 (rejected), discloses a process to produce a niobium powder through milling. The process involves grinding the metal powder at elevated temperatures and in the presence of at least one liquid solvent. Also disclosed is a process for forming a flocculated metal by wet milling a metal powder into a flocculated metal wherein at least one liquid fluorine-treated fluid is present during the wet milling process. It does not disclose a niobium pentoxide nanoparticle preparation like the present invention.

Chinese patent application CN 101798227A, from Guilin Tech Gut University, discloses a process for nanometer powder solid state synthesis of a niobate/titanate. Said process comprises the grinding of Niobium pentoxide, Sodium carbonate, Potassium carbonate, Titanium dioxide and Bismuth trioxide in a ball mill, to refine the particles and then calcine them in a defined stoichiometric proportion. The solid-state reaction results in the formation of a powder of Sodium-Potassium Niobate, Sodium Bismuth Titanate, or other mixtures wherein the particles are 80 nanometers or less. It does not disclose a niobium pentoxide nanoparticle preparation like the present invention.

US patent application US2007185242A1, filed by Huang Yuhong and abandoned, discloses a low temperature curing ink comprising nanometer metal hydroxide. The focus of said document is the composition for coating an electrode or a capacitor. The composition comprises submicrometer particles obtained by mechanical-chemical process, using Ruthenium hydroxide nanoparticles. In said document, metal hydroxide nanoparticles are manufactured by reacting a metal chloride with sodium hydroxide in water. It does not disclose a niobium pentoxide nanoparticle preparation like the present invention.

US patent application US2020391294, filed by the University of Missouri, discloses a process for the preparation of a powdered metal-ceramic material composite. In said process, a mill is used in which a metallic powder is comminuted together with ceramic nanoparticles to generate a metal-ceramic composite. The mill balls and its interior are ceramic. It does not disclose a niobium pentoxide nanoparticle preparation like the present invention.

From what can be seen from the researched literature, no documents were found anticipating or suggesting the teachings of the present invention.

### Summary of the Invention

The present invention solves several state-of-the-art problems related to niobium preparations with predominantly or entirely nanometric granulometry.

It is one of the objects of the invention to provide a preparation of niobium nanoparticles with high purity.

It is one of the objects of the invention to provide a preparation of Niobium particles of chemically defined composition.

It is one of the objects of the invention to provide a preparation of niobium pentoxide particles with d50 to d99 in the nanometer granulometric range.

It is one of the objects of the invention to provide a preparation of niobium pentoxide particles with d90 to d99 in the nanometer granulometric range.

In some embodiments, the niobium pentoxide nanoparticle preparation has a mean particle size (d50) between 178 and 239 nm.

It is one of the objects of the invention to provide a preparation of niobium particles in the granulometric range below 100 nanometers.

In some embodiments, the niobium pentoxide nanoparticle preparation has a granulometric distribution: d10: between 9 and 27 nm; d50: between 16 and 67 nm; and d90: between 33 and 94 nm.

In other embodiments, the niobium pentoxide nanoparticle preparation has a granulometric distribution: d10: between 14 and 110 nm; d50: between 29 and 243 nm; and d90: between 89 and 747 nm.

It is one of the objects of the invention to provide a preparation of Niobium particles with a specific surface area between 0.5 and 150 m²/g.

In one embodiment, the niobium pentoxide nanoparticle preparation has an average specific surface area of 40 to 70 m²/g.

The nanoparticle preparation of the invention is useful in several applications, including: the modulation or improvement of the mechanical properties of steels, metallic and non-metallic alloys, ceramics and/or polymers; the doping of materials to modulate electromagnetic properties for use in electronic components, battery cells, energy storage systems, solar panels, sensors and piezoelectric actuators; the modulation of optical properties of glasses or other transparent or translucent materials; use as a component of catalysts; in the preparation of stable liquid/colloidal compositions.

In one embodiment, the preparation of nanoparticles of the invention provided the preparation of stable liquid compositions, in which the nanoparticles remain in suspension for a long time, providing a high shelf-life.

It is therefore one of the objects of the invention the use of the niobium nanoparticles of the invention in the preparation of stable liquid/colloidal compositions.

It is another object of the invention to provide a process for preparing a preparation of niobium nanoparticles by a top-down approach, that is, by comminution without chemical or mechanical-chemical synthesis. Said process has a large scale and is suitable for economic viability and effective availability of preparations.

The process of the invention comprises the steps of:
- feeding niobium particles to a comminution equipment selected from: high energy mill and steammill;
- adjust the comminution conditions selected from:
   - in a high energy mill:
   - suspend particles to be comminuted in a liquid, in a concentration between 1 and 90% m/m, and stabilize the suspension until obtaining a stable colloidal suspension; and
   - place said suspension and grinding balls with a selected diameter between 5 µm and 1.3 mm in the grinding chamber; adjust the mill rotation speed between 500 and 4500 rpm; and grinding the particles at a temperature below 60°C; or
   - in a jet mill with superheated fluid or steammill, feed particles smaller than 40 micrometers; adjust the speed of the air classifier between 1,000 and 25,000 rpm; adjust the compressed steam pressure between 10 and 100 bar and temperature between 230 and 360°C.
   - comminute the particles until obtaining the desired granulometric profile.

In one embodiment, the stabilization of the colloidal suspension to be placed in the grinding chamber of the high energy mill referred to above is selected from: adjusting the pH of the polar liquid medium to the range between 2 to 13, and optionally adding surfactants; or the addition of surfactants in a non-polar liquid medium.

In one embodiment, the process for obtaining niobium nanoparticles includes milling in a high-energy mill operating with spheres of special materials, such as Zirconia, Yttria-stabilized Zirconia, Niobium pentoxide stabilized Zirconia, or combinations thereof, by adjusting the specific parameters.

In another embodiment, the process for obtaining niobium nanoparticles includes milling in a jet mill with superheated steam, superheated steam or steammill, by adjusting specific parameters.

These and other objects of the invention will be immediately appreciated by those skilled in the art and will be described in detail below.

### Brief Description of the Figures

The following figures are shown:

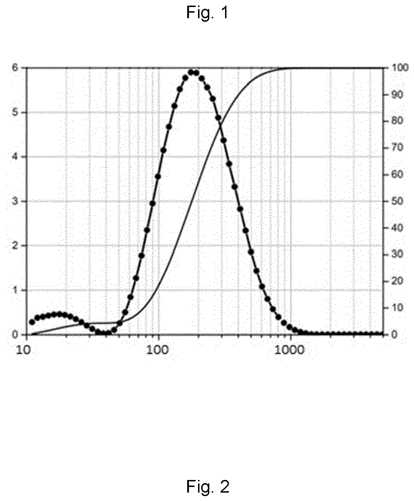

Figure 1 shows the particle size distribution of an embodiment of Niobium (Nb₂O₅) nanoparticle preparation of the invention, showing the granulometric profile measured by the laser scattering method, using an Analysette 22 NanoTecplus brand FRITSCH. Shown are: granulometric distribution or equivalent diameter on the particle volumetric base in nanometers (horizontal axis), the relative fraction of the nanoparticles (vertical axis on the left) and cumulative fraction (vertical axis on the right).
Figure 2 shows a photo of a sedimentation test as a function of the pH of the suspension formed by Nb₂O₅ particles in an aqueous solution adjusted with HCl or NaOH to change the pH of the medium. The different equilibrium pHs are shown in the numbered tubes: 2, 4, 9 and 12.

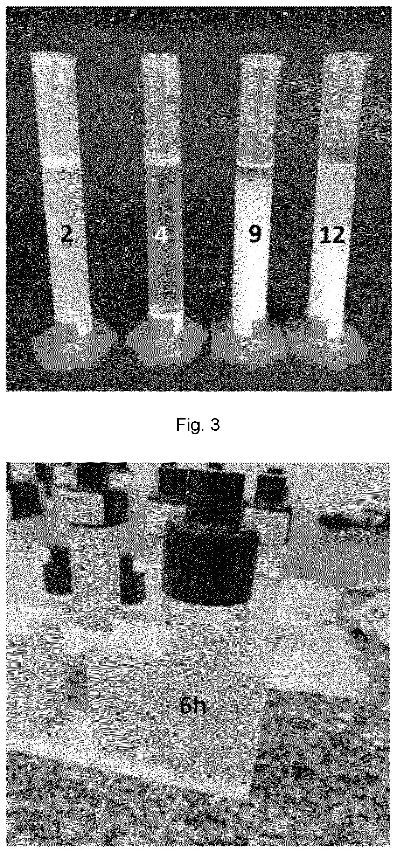

Figure 3 shows a photo of a stabilization test tube as a function of time (shelf-life) used in the turbidimetry analysis in a TURBISCAN-type equipment, showing a tube containing a suspension of niobium nanoparticles at pH 9 after 6 hours of evaluation.

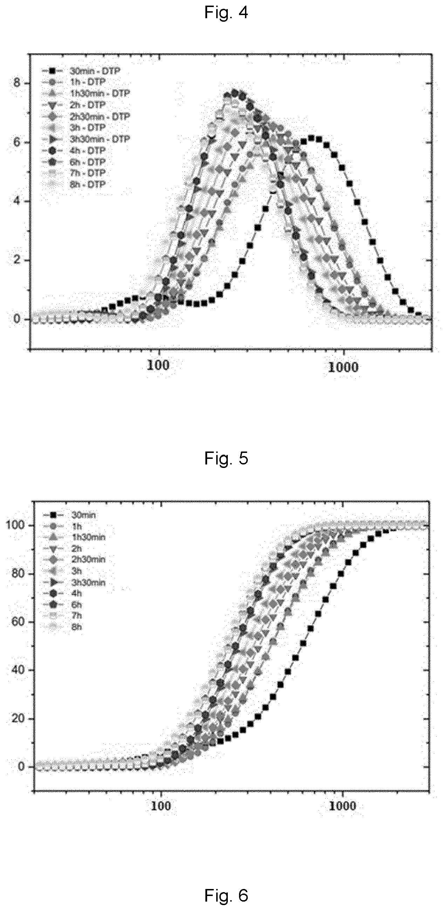

Figure 4 shows the particle size distribution of niobium pentoxide comminuted as a function of grinding time in a high energy mill (sampling frequency). The equivalent diameter of the particles in nm is shown on the x-axis and the frequency in % on the y-axis.
Figure 5 shows the particle size distribution as a function of the cumulative volume of the comminuted niobium pentoxide sample. The equivalent diameter in nm is shown on the x-axis and the cumulative volume in % on the x-axis.
Figure 6 shows the cumulative distribution profile of Nb₂O₅ particles in alcohol as a dispersant at the inlet of a jetmill. The equivalent diameter in microns is shown on the x-axis, on the left y-axis the volume % and on the right y-axis the cumulative volume %.

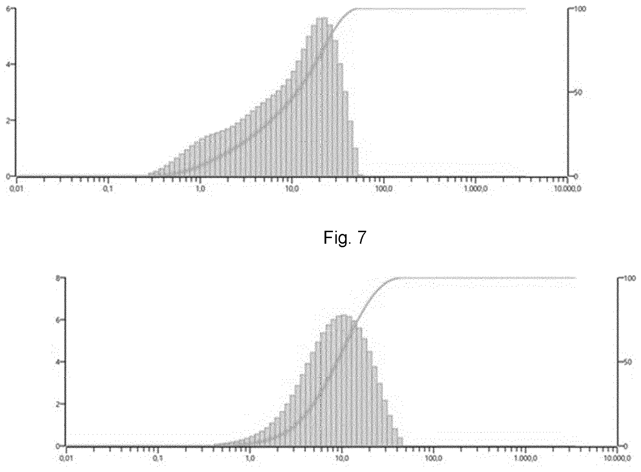

Figure 7 shows the cumulative particle distribution profile of Nb₂O₅ particles in alcohol as a dispersant at the outlet of a jetmill. The equivalent diameter in microns is shown on the x-axis, on the left y-axis the volume % and on the right y-axis the cumulative volume %.

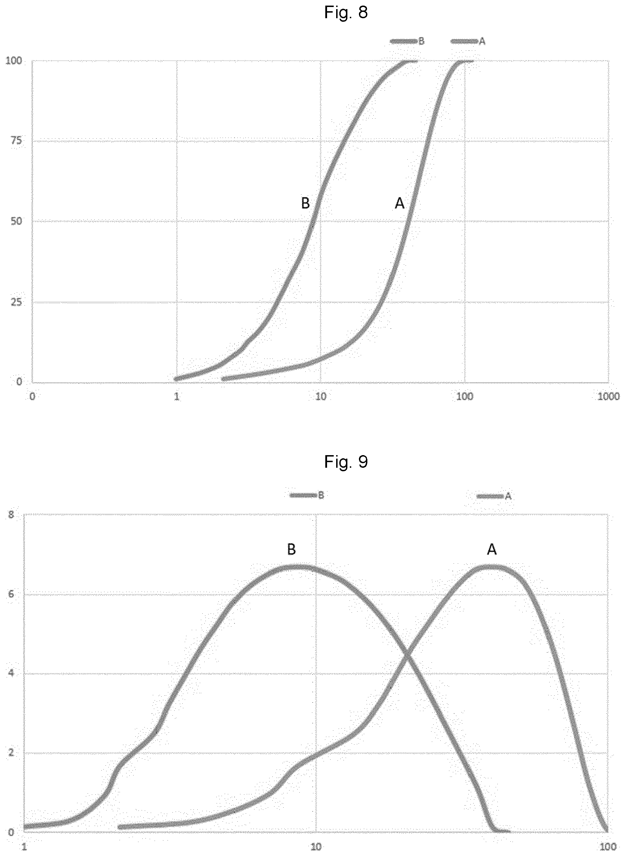

Figure 8 shows the curves corresponding to the granulometric distribution profile of the commercial product containing niobium pentoxide (curve A = input) and the pre-comminuted niobium pentoxide preparation (curve B). The equivalent diameter of the particles in micrometers is shown on the x-axis and the cumulative volume in % is shown on the y-axis.
Figure 9 shows the curves corresponding to the granulometric distribution profile of the commercial product containing niobium pentoxide (curve A = input) and the pre-comminuted niobium pentoxide preparation (curve B). The equivalent diameter of the particles in micrometers is shown on the x-axis and the frequency in % is shown on the y-axis.

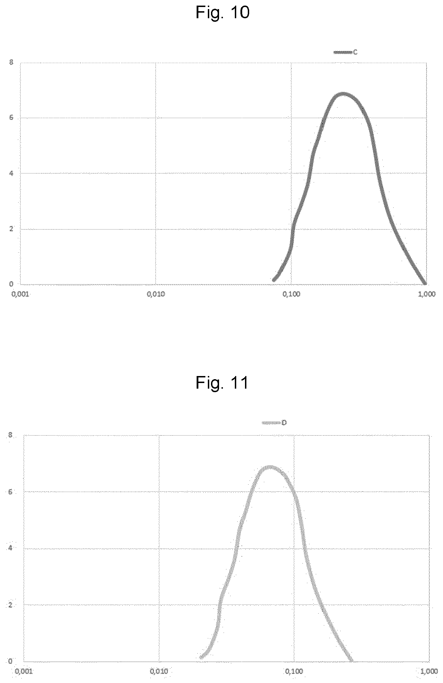

Figure 10 shows the curve corresponding to the particle size distribution profile of the preparation of niobium pentoxide nanoparticles (curve C) in the entire nanometer range, with particles between 74 and 747 nm. The equivalent diameter of the particles in micrometers is shown on the x-axis and the frequency in % is shown on the y-axis.
Figure 11 shows the curve corresponding to the particle size distribution profile of the niobium pentoxide nanoparticle preparation (curve D) in the entire nanometer range, with particles between 20 and 206 nm. The equivalent diameter of the particles in micrometers is shown on the x-axis and the frequency in % is shown on the y-axis.

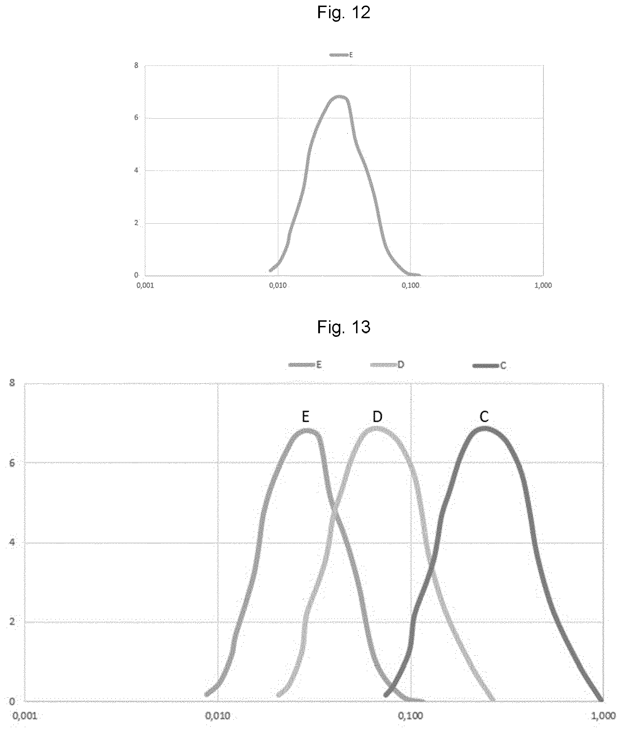

Figure 12 shows the curve corresponding to the particle size distribution profile of the niobium pentoxide nanoparticle preparation (curve E) in the entire nanometer range, with particles between 8 and 89 nm. The equivalent diameter of the particles in micrometers is shown on the x-axis and the frequency in % is shown on the y-axis.
Figure 13 shows the curves corresponding to the granulometric distribution profiles of three different preparations of pre-comminuted niobium pentoxide (curves C, D and E) in a single graph. The equivalent diameter of the particles in micrometers is shown on the x-axis and the frequency in % is shown on the y-axis.

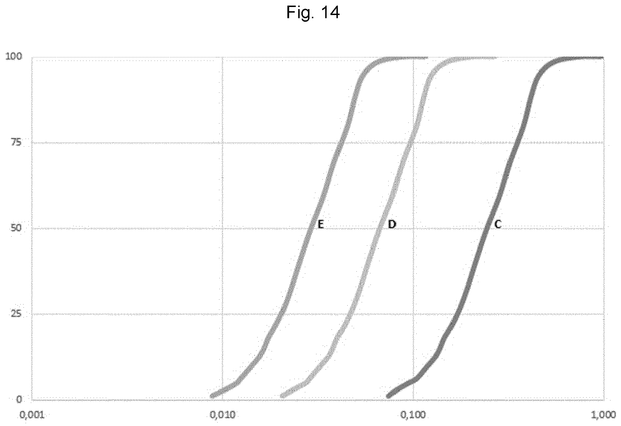

Figure 14 shows the curves corresponding to the granulometric distribution profiles of three different preparations of pre-comminuted niobium pentoxide (curves C, D and E) in a single graph. The equivalent diameter of the particles in micrometers is shown on the x-axis and the frequency in % is shown on the y-axis.

### Detailed Description of the Invention

The present invention solves several state-of-the-art problems and provides a preparation of niobium nanoparticles that concomitantly contemplates the following technical characteristics: particles predominantly or entirely in the nanometer granulometric range; high purity; an industrial-scale process that enables supply and use on an economic scale. Said preparation can also be called preparation of niobium nanoparticles.

In the present invention, the term "Niobium particles" encompasses various chemical entities containing Niobium, including Niobium metal, oxides, hydrates, hydrides, carbides, or nitrides of Niobium, Niobium iron or Niobium bonded to other metals or transition metals, or combinations thereof. It also includes Niobium Pentoxide.

The invention is also defined by the following provisions.

Preparation of nanoparticles comprising a content equal to or greater than 95 wt% Niobium particles, wherein 50% to 99% particles (d50 to d99) are in the granulometric range from 5 to 1000 nanometers (nm).

Preparation of nanoparticles comprising a content equal to or greater than 95 wt% Niobium particles, wherein 90% to 99% particles (d90 to d99) are in the granulometric range from 5 to 1000 nanometers (nm).

Preparation of nanoparticles as defined above comprising a content equal to or greater than 99 wt% Niobium particles.

Preparation of nanoparticles as defined above wherein the nanoparticles are Niobium Pentoxide.

Preparation of nanoparticles as defined above having particle size distribution d10: between 14 and 110 nm; d50: between 29 and 243 nm; and d90: between 89 and 747 nm.

Preparation of nanoparticles as defined above having a d10 particle size distribution from 70 to 100 nm; d50 from 170 to 240 nm; d90 from 400 to 580 nm.

Preparation of nanoparticles as defined above having d50 particle size distribution from 10 to 178 nm; d80 from 10 to 300 nm; d90 from 10 to 400 nm.

Preparation of nanoparticles as defined above in 90% to 99% particles (d90 to d99) are in the granulometric range from 100 to 1000 nm.

Preparation of nanoparticles as defined above wherein 90% to 99% particles (d90 to d99) are in the granulometric range from 5 to 100 nm.

Preparation of nanoparticles as defined above having particle size distribution d10: between 9 and 27 nm; d50: between 16 and 67 nm; d90: between 33 and 94 nm.

Preparation of nanoparticles as defined above having specific surface area between 0.5 and 150 m²/g.

Preparation of nanoparticles as defined above having an average specific surface area of 40 to 70 m²/g.

Use of nanoparticle preparation described above for adjusting the rheological properties of other particle or nanoparticle preparations, adjusting degrees of packing, fluidity, void fractions or other properties of the final preparation.

Use of the nanoparticle preparation described above for the preparation of: stable colloidal compositions; steels, metallic and non-metallic alloys, ceramics and/or polymers; electronic components, battery cells, energy storage systems, piezoelectric sensors and actuators, solar panels; glass, glass ceramics or other transparent and translucent materials; catalysts.

Process for obtaining niobium nanoparticles comprising the steps of:
- feeding niobium particles to a comminution equipment selected from: high-energy mill and steammill;
- adjusting the comminution conditions selected from:
   - in a high-energy mill:
   - to suspend particles to be comminuted in a liquid, in a concentration between 1 and 90% m/m, and stabilize the suspension until obtaining a stable colloidal suspension; and
   - to place said suspension and grinding balls with a selected diameter between 5 µm and 1.3 mm in the grinding chamber; adjusting the mill rotation speed between 500 and 4500 rpm; and grinding the particles at a temperature below 60°C; or
   - in a jet mill with superheated fluid or steammill, feeding particles smaller than 40 micrometers; adjust the speed of the air classifier between 1,000 and 25,000 rpm; adjust the compressed steam pressure between 10 and 100 bar and temperature between 230 and 360°C;
   - comminuting the particles until obtaining the desired granulometric profile.

Process as described above in which the stabilization of the colloidal suspension to be placed in the grinding chamber of the high-energy mill is selected from: adjusting the pH of the polar liquid medium to the range between 2 and 13, and optionally adding surfactants; or the addition of surfactants in a non-polar liquid medium.

Process as described above, further comprising a pre-comminution step of the Niobium particles before the feeding step to the comminution equipment, said pre-comminution being conducted until reaching a mean particle size between 1 and 40 micrometers.

Process wherein said pre-comminution is performed in a ball mill, disk mill or high-energy mill.

Process wherein said pre-comminution is performed in a jet mill.

Process as described above in which the high-energy mill is of the agitated medium type and said spheres are selected from: Zirconia, Silicon carbide, alumina, said spheres optionally being stabilized with Yttria or Niobium pentoxide, or combinations thereof.

Process as described above wherein the operating pH in the mill is 6 to 10.

Process as described above wherein the operating temperature in the mill is 30 to 40°C.

In one embodiment, a preparation of niobium pentoxide (Nb₂O₅) nanoparticles with purity equal to or greater than 99% is provided.

In one embodiment, the niobium nanoparticle preparation of the present invention has a particle size between 5 and 1000 nanometers. In some embodiments, the preparation of nanoparticles of the invention comprises particles with defined particle size fractions, for example, a preparation with particles integrally between 100 and 1000 nm, a preparation with particles integrally between 5 and 100 nanometers, and preparations with particles in intermediate values and with granulometric fractions of defined value.

In some embodiments of the present invention, as is already the practice of the segment, the distribution of granulometric fractions is defined by d10, d50, d90 and occasionally d99, notations reflecting the accumulated % volume of particles corresponding to each notation, d10 referring to 10% of the particles volume, d50 to 50% of the volume and so on.

In some embodiments, the invention provides a preparation of Niobium particles in the granulometric range below 100 nanometers.

In some embodiments, the niobium pentoxide nanoparticle preparation has a granulometric distribution: d10: between 9 and 27 nm; d50: between 16 and 67 nm; and d90: between 33 and 94 nm.

In other embodiments, the niobium pentoxide nanoparticle preparation has a granulometric distribution: d10: between 14 and 110 nm; d50: between 29 and 243 nm; and d90: between 89 and 747 nm.

In some embodiments, the invention provides a preparation of Niobium particles with specific surface area between 50 and 148 m²/g.

In one embodiment, the niobium pentoxide nanoparticle preparation has a mean specific surface area of 62.07 m²/g.

In one embodiment, a preparation of niobium pentoxide nanoparticles with an average particle size (d50) of 16 nm is provided. In another embodiment, the niobium pentoxide nanoparticle preparation has a mean particle size (d50) of 29 nm. In another embodiment, the niobium pentoxide nanoparticle preparation has a mean particle size (d50) of 67 nm. In another embodiment, the niobium pentoxide nanoparticle preparation has a mean particle size (d50) of 178 nm.

The nanoparticle preparation of the invention is useful in several applications, including: preparation of stable colloidal suspensions; modulation or improvement of the mechanical properties of steels, metallic and non-metallic alloys, ceramics and/or polymers; doping of materials to modulate electromagnetic properties for use in electronic components, battery cells, energy storage systems, solar panels, sensors and piezoelectric actuators; the modulation of optical properties of glasses or other transparent materials; use as a component of catalysts.

In one embodiment, the use of the nanoparticle preparation of the invention provided stable liquid compositions or colloidal suspensions, wherein the nanoparticles remain in suspension for a long time, providing a long shelf-life.

The process for obtaining niobium nanoparticles differs from other congeners because it is a top-down process, without chemical reactions or mechanical-chemistry. The fact that pure or high-purity niobium particles are used for comminution provides the obtainment of high-purity nanoparticle preparations, since the process does not add impurities or lead to the formation of reaction products, as is the case with processes bottom-up, synthesis or state-of-the-art mechanical-chemicals.

The process of the invention comprises the steps of:
- feeding Niobium particles to a comminution equipment selected among: high energy mill; and steammill;
- adjusting the comminution conditions selected from:
   - in a high-energy mill:
   - suspending particles to be comminuted in a liquid, in a concentration between 1 and 90% m/m, and stabilize the suspension until obtaining a stable colloidal suspension; and
   - placing said suspension and grinding balls with a selected diameter between 5 µm and 1.3 mm in the grinding chamber; adjusting the mill rotation speed between 500 and 4500 rpm; and grinding the particles at a temperature below 60°C;
   - in a jet mill at superheated temperature or steammill, feeding particles smaller than 40 micrometers; adjusting the speed of the air classifier between 1,000 and 25,000 rpm; adjusting the compressed steam pressure between 10 and 100 bar and temperature between 230 and 360°C; and
   - comminuting the particles until obtaining the desired granulometric profile.

Pre-process mean particle size reduction as demonstrated above is particularly useful for improving the performance of the subsequent comminution process in a high-energy mill, as demonstrated in examples 1-4 and 7, or in a steammill comminution process, described in example 6 below.

In one embodiment, the process involves wet milling in a high-energy mill and makes it possible, on an industrial scale, for the first time, to obtain niobium pentoxide particles predominantly or entirely in the nanometer granulometric range. In the embodiments in which the comminution is performed in high-energy wet mills, the stabilization of the colloidal suspension to be placed in the grinding chamber of the high-energy mill is a very important step, being selected from: adjusting of the polar liquid medium pH for the range between 2 and 13, and optionally adding surfactants; or adding surfactants in a non-polar liquid medium.

In one embodiment, a mill known from the state of the art is used, such as, for example, a high-energy mill with Yttria-stabilized Zirconia spheres (ZrO₂ + Y₂O₃), by adjusting specific parameters, including rotation time, pH and temperature. In one embodiment, the grinding medium includes Zirconia balls, ZTA (Alumina-reinforced Zirconia or Yttrium) and alumina. Preferably, zirconium spheres stabilized with 5% m/m Yttria are used.

In another embodiment, the process involves comminution by a jet mill with superheated steam (steammill), to which particles smaller than 40 microns are fed, the air classifier rotation being adjusted between 1,000 and 25,000 rpm, the compressed steam pressure between 10 and 100 bar, and the temperature between 230 and 360°C.

### Examples

The examples shown herein are intended only to exemplify some of the various ways of performing the invention, however without limiting its scope.

### Example 1 - Niobium pentoxide (Nb₂O₅) wet grinding process in high-energy mill

In this embodiment, the preparation of niobium pentoxide nanoparticles was obtained by milling with adjustment of parameters that include rotation speed, pH, temperature.

Niobium pentoxide (Nb₂O₅) from a commercial source, with high purity and with granulometric distribution d90=68.425, d50=20.867 and d10=0.345 (µm) was fed to a high energy mill of the agitated medium type. Said mill operates with grinding balls/spheres from 5 µm to 1.3 mm in diameter, made of Yttria-stabilized Zirconia. In this embodiment, the size of said balls was 400 µm. The grinding conditions of the said material, to obtain the niobium nanoparticle powder (Nb₂O₅), included: rotation speeds between 1000 and 4500 rpm, temperatures below 40°C maintained with the aid of a forced cooling system external to the said mill. After 30 to 120 minutes of operation under these conditions, a powder preparation containing niobium nanoparticles was obtained.

Different grinding conditions were tested to evaluate efficiency. Table 1 shows the test results on different milling parameters and times:

**Table 1 - Grinding efficiency and granulometric distribution (d10, d50 and d90) in micrometers (µm)**

| **Time (min)** | **pH** | **Technique** | **T (°C)** | **d10** | **d50** | **d90** |
|---|---|---|---|---|---|---|
| 0 | 11.13 | Fraunhofer | 17 | 0.345 | 20.867 | 68.425 |
| 30 | 6.63 | Mie | 34.7 | 0.077 | 0.178 | 0.402 |
| 60 | 6.43 | Mie | 35 | 0.077 | 0.186 | 0.405 |
| 90 | 6.25 | Mie | 35.8 | 0.084 | 0.183 | 0.384 |
| 120 | 6.08 | Mie | 35.8 | 0.099 | 0.239 | 0.576 |

The data in table 1 show that under condition of a grinding time of 30 minutes, pH 6.63, with the size measurement technique by laser scattering according to the Mie model and on a volumetric basis, and a temperature of 34.7°C, nanoparticles with d10 of 0.077 were obtained; d50 of 0.178; and d90 of 0.402 (respectively 77 nm, 178 nm and 402 nm).

### Example 2 - Particle size measurement

The particle size distribution was measured by the laser scattering method, using the Analysette 22 NanoTecplus brand FRITSCH. As shown in figure 1, the preparation of niobium nanoparticles of the invention has a granulometric distribution integrally in the range of nanoparticles. Figure 1 shows the particle size distribution or equivalent diameter of the particles in nanometers (horizontal axis), the relative fraction of the nanoparticles (left vertical axis) and cumulative fraction (right vertical axis). The figure shows that the niobium nanoparticles of this embodiment of the invention have an equivalent diameter between 10 and 1000 nanometers (nm), with 90% between 10 and 400 nm, 80% between 10 and 300 nm, 50% between 10 and 178 nm,

### Example 3 - Stable colloidal suspension - Stability test of Niobium particles as a function of pH and in aqueous solution

The nanoparticle preparation obtained according to example 1 was used to obtain a stable colloidal suspension and stabilization tests as a function of pH were performed. Figure 2 shows the results obtained in tubes numbered for the different tested pHs: 2, 4, 9, 12. As illustrated in figure 2, the results show the stability of the Niobium nanoparticles is very dependent on the pH of the medium, and that at pH 4 the particles reached their highest instability. It is also observed that at this pH 4 practically 100% of the particles sedimented, since the supernatant liquid in the test tube is completely free of solid particles with sizes that could suffer interference from the visible light of the environment. The supernatant liquid has the typical translucency of the aqueous solution used. It is also observed the accumulation of Niobium particles at the bottom of the tubes with pH 4, indicating the height of the sediment formed by the particles. At pH 9, the particles in that condition are less susceptible to sedimentation and showed greater stability.

### Example 4 - Liquid compositions containing Niobium nanoparticles-stability/shelf-life tests

The preparation of nanoparticles according to examples 1 and 2 was submitted to the stability test as a function of time (shelf-life). Figure 3 shows the result of said test, indicating that after 6 hours of turbidimetry testing in a TURBISCAN equipment, the particles at pH 9 remained stable and did not form sediments. This behavior is typical of stable nanometer particles.

### Example 5 - Niobium pentoxide (Nb₂O₅) wet grinding process in high-energy mill

A Labstar LS01 ball mill (Netzsch) was fed with micrometric particles of niobium pentoxide. Said process involves high-energy wet milling. The particle suspension was 17.7% m, consisting of approximately 3500 g of milli-Q water + 10 M NaOH and 750 g of the solid sample which was prepared and stabilized in the mill mix tank at pH 9, titrated with 10 M NaOH. The grinding balls used were Yttria-stabilized zirconia, 400 µm in diameter. The filling of the grinding chamber was 80% vol and the suspension temperature below 40°C. The mill rotation speed was set to 3000 rpm and grinding was performed for 8 hours. To stabilize the suspension at pH 9, additions of 10 M NaOH were made during milling, samples were taken from time to time and particle sizes were measured.

The measurement of the particles was carried out in Fritsch equipment, model Analysette 22, with a unit for wet particle size measurements as an accessory. Particle size distribution measurements were made by static light scattering. The analysis medium was distilled water. An aliquot of the suspension with 17.7% m, during the milling process, was analyzed in ten repetitions by the equipment. The results in table 2 show the measurements (average of 10 measurements) and the DTP (particle size distribution) obtained in each grinding time under the conditions indicated above.

**Table 2 Results of d10, d50 and d90 in nanometers.**

| **Sampling (time in hours)** | **D10 (nm)** | **D50 (nm)** | **D90 (nm)** |
|---|---|---|---|
| 0.5 | 226 | 660 | 1366 |
| 1 | 207 | 449 | 919 |
| 1.5 | 193 | 450 | 943 |
| 2 | 181 | 382 | 778 |
| 2.5 | 180 | 358 | 711 |
| 3 | 165 | 336 | 601 |
| 3.5 | 159 | 298 | 540 |
| 4 | 153 | 286 | 519 |
| 6 | 138 | 261 | 503 |
| 7 | 138 | 261 | 503 |
| 8 | 119 | 243 | 476 |

Particle size distribution curves as a function of frequency and cumulative volume are shown in Figures 4 and 5.

Figure 4 shows the particle size distribution of niobium pentoxide comminuted as a function of grinding time in a high-energy mill (sampling frequency). The equivalent diameter of the particles in nm is shown on the x-axis and the frequency in % on the y-axis.

Figure 5 shows the particle size distribution as a function of the cumulative volume of the comminuted niobium pentoxide sample. The equivalent diameter in nm is shown on the x-axis and the cumulative volume in % on the y-axis.

### Example 6 - Comminution of Niobium Pentoxide by Jetmill

In the present example, a jet mill was used to pre-comminute the niobium pentoxide particles in order to improve the performance of the subsequent comminution process up to an integral granulometric distribution (d99) in the nanometer range.

A sample of niobium pentoxide, with an input particle size distribution profile d90% 69.4 µm; d50% 40.6 µm and d10% 13.4 µm, relative humidity 0.85% (Sartorius-20 min at 105°C) and bulk density 1.62 g/cm³ was subjected to various comminution conditions in a jetmill, as summarized in Table 3.

**Table 3 - Comminution conditions in jetmill**

| **Tests** | **#** | **1** | **2** | **3** |
|---|---|---|---|---|
| Product | | 1 | 2 | 3 |
| Classifier Speed | Rpm | 18,000 | 18,000 | 18,000 |
| Grinding air pressure | bar(g) | 5.5 | 5.5 | 5.5 |
| Fan capacity | (%) | 30 | 20 | 22 |
| Inlet air temperature | °C | 28 | 27 | 28 |
| Quantity of starting material | Kg | 5 | 5 | 5 |
| Test time | Min | 30 | 30 | 30 |
| Product flow | kg/h | 0.9 | 0.8 | 0.8 |
| Nozzle diameter | Mm | 2.1 | 2.1 | 2.1 |
| Nozzles distance | Mm | 80 | 80 | 80 |
| Classifier pressure | mbar(g) | 0.12 | 0.11 | 011 |
| Slit pressure | mbar(g) | 0.16 | 0.16 | 0.14 |
| Classifier current | A | 1.53 | 1.52 | 1.54 |
| Bulk density | g/L | 1.6 | 1.6 | 1.6 |
| Final moisture | % | 0.8 | 0.8 | 0.8 |
| Specific grinding energy | kWh/kg | 1.66 | 1.87 | 1.87 |
| Specific air flow | m³/kg | 44.3 | 49.8 | 49.8 |
| Dosage | A/B | 1% low | 1% low | 1% low |
| Granulometry in Master 3000 | % | µm | µm | µm |
| | d10 | 1.41 | 1.44 | 2.77 |
| | d50 | 11.40 | 10.40 | 8.88 |
| | d90 | 31.10 | 28.50 | 22.30 |

Figure 6 shows the cumulative particle distribution profile of Nb₂O₅ in alcohol as a dispersant in ajetmill (product 1 in table 3 above). The equivalent diameter in microns is shown on the x-axis, on the left y-axis the volume % and on the right y-axis the cumulative volume %. For this sample the residual weight is 1.14%, the specific surface area 1.536 m²/g, and the concentration 0.0020%. The particle distribution profile is dD90=31.1 µm; D50=11.4 µm; d10=1.41 µm.

Figure 7 shows the cumulative particle distribution profile of Nb₂O₅ in alcohol as a dispersant in ajetmill (product 3 in table 3 above). The equivalent diameter in microns is shown on the x-axis, on the left y-axis the volume %, and on the right y-axis the cumulative volume %. For this sample the residual weight is 0.68%, the specific surface area 1.063 m²/g, and the concentration 0.0081%. The particle distribution profile is dD90=22.3 µm; D50=8.88 µm; d10=2.77 µm.

Reducing the average particle size as demonstrated above is particularly useful for improving the performance of the subsequent high-energy mill comminution process as demonstrated in Examples 1-4 or the comminution process described in Example 7 below.

### Example 7 - Comminution of Niobium Pentoxide by Steammill

In this embodiment, Nb₂O₅ particles with the distribution profile according to figure 7 (example 6), dD90=22.3 µm ; D50=8.88 µm; d10=2.77 µm were fed to a steammill.

Then, the air classifier rotation was adjusted to 20,000 rpm and the compressed steam pressure to 50 bar. The temperature of the superheated fluid was 280°C.

After operating under these conditions, a particle size distribution profile similar to that obtained in examples 1-2, figure 1, was obtained.

### Example 8 - High purity and defined granulometric distribution of Niobium pentoxide (Nb₂O₅) nanoparticle preparations

In the present example, several embodiments of Niobium pentoxide nanoparticle preparations were obtained, with purity greater than 99%. Commercial niobium pentoxide, with the granulometric distribution described in Table 4, was pre-comminuted in a high-energy mill containing Yttria-stabilized zirconia spheres with a diameter of 400 µm, in liquid medium and the pH adjusted to 6.6. The mill rotation speed was 3500 rpm and the grinding of the particles was performed at a temperature below 40°C. Table 4 shows the particle size distribution (DTP) of input niobium pentoxide (commercial product) and output niobium pentoxide of a pre-comminution step.

**Table 4 - Input DTP (commercial product) and output after a pre-comminution.**

| **DTP for Niobium pentoxide** | | |
|---|---|---|
| **% cumulative** | **diameter [µm]** | |
| | **Input** | **Output** |
| 1.13 | 2.130 | 0.991 |
| 2.97 | 4.030 | 1.450 |
| 4.87 | 6.720 | 1.880 |
| 6.22 | 8.680 | 2.130 |
| 10.00 | 13.400 | 2.770 |
| 12.72 | 16.400 | 3.120 |
| 15.03 | 18.700 | 3.550 |
| 17.96 | 21.200 | 4.030 |
| 21.73 | 24.100 | 4.580 |
| 26.56 | 27.400 | 5.210 |
| 32.68 | 31.100 | 6.120 |
| 40.22 | 35.300 | 7.440 |
| 50.00 | 40.600 | 8.880 |
| 59.08 | 45.600 | 10.160 |
| 69.48 | 51.800 | 12.700 |
| 79.47 | 58.900 | 16.500 |
| 88.11 | 66.900 | 21.200 |
| 94.59 | 76.000 | 27.400 |
| 98.55 | 86.400 | 35.300 |
| 99.99 | 98.100 | 40.100 |

Figure 8 shows the curves corresponding to the granulometric distribution profile of the commercial product containing niobium pentoxide (curve A = input) and the pre-comminuted niobium pentoxide preparation (curve B). The equivalent diameter of the particles in micrometers is shown on the x-axis and the cumulative volume in % is shown on the y-axis.

Figure 9 shows the curves corresponding to the granulometric distribution profile of the commercial product containing niobium pentoxide (curve A = input) and the pre-comminuted niobium pentoxide preparation (curve B). The equivalent diameter of the particles in micrometers is shown on the x-axis and the frequency in % is shown on the y-axis. The data show that the pre-comminution step allows obtaining a preparation containing niobium pentoxide microparticles with particles between 1 and 40 micrometers.

The average specific surface area S (m²/g) of the particles after the pre-comminution step was 0.32 m²/g.

In one embodiment, the pre-comminuted particles were then fed to a high-energy mill, applying conditions similar to those described in example 5, but with 200 µm Zr spheres and milled for different times, until obtaining each preparation of nanoparticles. Three different preparations of nanoparticles were obtained, each with a defined granulometric distribution as described in table 5.

**Table 5 - Particle size distribution of three different preparations (C, D and E) of niobium pentoxide nanoparticles.**

| **DTP for Niobium pentoxide** | | | |
|---|---|---|---|
| **% cumulative** | **diameter [µm]** | | |
| | **C** | **D** | **E** |
| 1.13 | 0.074 | 0.021 | 0.009 |
| 2.97 | 0.082 | 0.024 | 0.010 |
| 4.87 | 0.098 | 0.027 | 0.012 |
| 6.22 | 0.104 | 0.029 | 0.012 |
| 10.00 | 0.119 | 0.033 | 0.014 |
| 12.72 | 0.131 | 0.036 | 0.016 |
| 15.03 | 0.138 | 0.038 | 0.017 |
| 17.96 | 0.145 | 0.040 | 0.017 |
| 21.73 | 0.159 | 0.044 | 0.019 |
| 26.56 | 0.175 | 0.048 | 0.021 |
| 32.68 | 0.192 | 0.053 | 0.023 |
| 40.22 | 0.212 | 0.058 | 0.025 |
| 50.00 | 0.243 | 0.067 | 0.029 |
| 59.08 | 0.282 | 0.078 | 0.034 |
| 69.48 | 0.322 | 0.089 | 0.038 |
| 79.47 | 0.376 | 0.104 | 0.045 |
| 88.11 | 0.413 | 0.114 | 0.049 |
| 94.59 | 0.455 | 0.125 | 0.054 |
| 98.55 | 0.550 | 0.152 | 0.066 |
| 99.99 | 0.747 | 0.206 | 0.089 |

Figure 10 shows the curve corresponding to the granulometric distribution profile of the preparation of niobium pentoxide nanoparticles (curve C) integrally (d99.99) in the nanometer range, with particles between 74 and 747 nm. The equivalent diameter of the particles in micrometers is shown on the x-axis and the frequency in % is shown on the y-axis.

Figure 11 shows the curve corresponding to the granulometric distribution profile of the preparation of niobium pentoxide nanoparticles (curve D) integrally (d99.99) in the nanometer range, with particles between 20 and 206 nm. The equivalent diameter of the particles in micrometers is shown on the x-axis and the frequency in % is shown on the y-axis.

Figure 12 shows the curve corresponding to the particle size distribution profile of the niobium pentoxide nanoparticle preparation (curve E) integrally (d99.99) in the nanometer range, with particles between 8 and 89 nm. The equivalent diameter of the particles in micrometers is shown on the x-axis and the frequency in % is shown on the y-axis.

Figure 13 shows the curves corresponding to the granulometric distribution profiles of the three different preparations of pre-comminuted niobium pentoxide from figures 10-12 (curves C, D and E) in a single graph. The equivalent diameter of the particles in micrometers is shown on the x-axis and the frequency in % is shown on the y-axis.

Figure 14 shows the curves corresponding to the granulometric distribution profiles of three different preparations of pre-comminuted niobium pentoxide (curves C, D and E) in a single graph. The equivalent diameter of the particles in micrometers is shown on the x-axis and the frequency in % is shown on the y-axis.

The nanoparticle preparations of this embodiment of the invention have a very high specific surface area, which enables their use in a very wide variety of applications. Table 6 shows the mean specific surface area data of the niobium pentoxide nanoparticle preparations.

**Table 6 - Mean specific surface area S of three different preparations of niobium pentoxide nanoparticles (C, D and E).**

| | **S [m²/g]** | | |
|---|---|---|---|
| | **C** | **D** | **E** |
| **Mean** | 7.44 | 26.85 | 62.07 |

It should be noted that in some fractions of preparation E, niobium pentoxide nanoparticles greater than 90 m²/g were obtained and one of the fractions resulted in 148.2 m²/g, values far above those never achieved in the prior art.

Those skilled in the art will know that through the use of classifiers, such as air classifiers or ultracentrifugation, the different granulometric fractions of each preparation can be separated, thereby enabling the obtaining of even narrower granulometric distribution profile curves in relation to those exemplified above.

### Example 9 - Preparations of nanoparticles resulting from the combination of integrally nanometric preparations of Niobium Pentoxide (Nb₂O₅)

In the present example, different nanoparticle preparations were obtained by combining the two nanoparticle preparations (preparations C and E) exemplified in example 8 above.

In one embodiment, a 1:1 mixture of Preparation C and Preparation E of Example 8 was obtained by simple homogenization.

In another embodiment, a 1:10 mixture of preparation C and preparation E of example 8 was obtained by simple homogenization.

In another embodiment, a 1:1 mixture of preparation D and preparation B (pre-comminuted) of example 8 was obtained by simple homogenization.

The resulting granulometric distribution profiles provide adjustment of the rheology of the preparations obtained, since the combinations of larger particles (preparations B or C) with smaller nanoparticles (preparations D or E) provide different degrees of packing, void fractions, fluidity and different behaviors in subsequent applications such as sintering, dispersion in viscous liquids and other applications.

Those skilled in the art will value the knowledge presented herein and will be able to reproduce the invention in the presented modalities and in other variants and alternatives, covered by the scope of the following claims.

## Claims

1. Preparation of nanoparticles **characterized by** comprising a content equal to or greater than 95 wt% Niobium particles, wherein 50% to 99% of particles (d50 to d99) are in the granulometric range of 5 to 1000 nanometers (nm).

2. The preparation of nanoparticles according to claim 1, **characterized in that** 90% to 99% of particles (d90 to d99) are in the granulometric range of 5 to 1000 nanometers (nm).

3. The preparation of nanoparticles according to claim 1 or 2, **characterized in that** the content is equal to or greater than 99 wt% niobium particles.

4. The preparation of nanoparticles according to any one of claims 1 to 3, **characterized in that** the nanoparticles are niobium pentoxide.

5. The preparation of nanoparticles according to any one of claims 1 to 4, **characterized in that** the particle size distribution profile is: d10: between 14 and 110 nm; d50: between 29 and 243 nm; and d90: between 89 and 747 nm.

6. The preparation of nanoparticles according to any one of claims 1 to 4, **characterized in that** the particle size distribution profile is: d10 from 70 to 100 nm; d50 from 170 to 240 nm; d90 from 400 to 580 nm.

7. The preparation of nanoparticles according to any one of claims 1 to 4, **characterized in that** the particle size distribution profile is: d50 from 10 to 178 nm; d80 from 10 to 300 nm; d90 from 10 to 400 nm.

8. The preparation of nanoparticles according to any one of claims 1 to 4, **characterized in that** 90% to 99% of the particles (d90 to d99) are in the granulometric range between 100 and 1000 nm.

9. The preparation of nanoparticles according to any one of claims 1 to 4, **characterized in that** 90% to 99% of the particles (d90 to d99) are in the granulometric range between 5 and 100 nm.

10. The preparation of nanoparticles according to claim 9, **characterized in that** the particle size distribution profile is: d10: between 9 and 27 nm; d50: between 16 and 67 nm; d90: between 33 and 94 nm.

11. The preparation of nanoparticles according to any one of claims 1 to 4, **characterized in that** the specific surface area is from 0.5 to 150 m²/g.

12. The preparation of nanoparticles according to claim 11, **characterized in that** the average specific surface area is 40 to 70 m²/g.

13. Use of the preparation of nanoparticles as defined in any one of claims 1 to 12, **characterized in that** it is to obtain other preparations of particles or nanoparticles with adjusted rheological properties, adjusted degrees of packing or void fractions, adjusted fluidity of the final preparation.

14. The use of the nanoparticle preparation as defined in any one of claims 1 to 12, **characterized in that** it is for the preparation of: stable colloidal compositions; steels, metallic and non-metallic alloys, ceramics and/or polymers; composite materials, electronic components, battery cells, energy storage systems, piezoelectric sensors and actuators, solar panels; glass, glass ceramics, transparent and translucent materials; catalysts.

15. A process for obtaining niobium nanoparticles, **comprising** the steps of:
- feeding Niobium particles to a comminution equipment selected from: high-energy mill, ball mill and steammill;
- adjusting the comminution conditions selected from:
- in a high-energy mill: suspend particles to be comminuted in a liquid, in a concentration between 1% and 90% m/m, and stabilize the suspension until obtaining a stable colloidal suspension; placing said suspension and grinding balls with a selected diameter between 5 µm and 1.3 mm in the grinding chamber; adjust the mill rotation speed between 500 and 4500 rpm; and grinding the particles at a temperature below 60°C; or
- in a jet mill with superheated fluid or steammill, feeding particles smaller than 40 micrometers; adjusting the speed of the air classifier between 1,000 and 25,000 rpm; adjusting the compressed steam pressure between 10 and 100 bar and temperature between 230 and 360°C; and
- comminuting the particles until obtaining the desired granulometric profile.

16. Process according to claim 15, **characterized in that** said stabilization of the colloidal suspension is performed by: adjusting the pH of the polar liquid medium to the range from 2 to 13, and optionally adding surfactants; or add surfactants to the non-polar liquid medium.

17. The process according to claim 15 or 16, **characterized in that** it further comprises a pre-comminution step of the niobium particles before the feeding step to the comminution equipment, said pre-comminution being conducted until reaching a mean particle size of less than 40 micrometers.

18. The process according to claim 17, **characterized in that** said pre-comminution is performed in a ball mill, disk mill or high-energy mill or in a jet mill.

19. The process according to claim 15 or 16, **characterized in that** it comprises the steps of:
- feeding a high-energy mill with micrometric niobium pentoxide (Nb₂O₅) particles;
- feeding said mill with a liquid and adjusting the pH in the range from 5 to 10;
- feeding said mill with balls with a selected diameter between 50 µm and 400 µm;
- adjusting the mill rotation speed between 2000 and 4000 rpm; and
- grinding the particles at a temperature below 60°C until the desired granulometric profile is obtained.

20. The process according to claim 15, **characterized in that** the high-energy mill is of the agitated medium type and said spheres are selected from: Zirconia, Silicon carbide, alumina, said spheres being optionally stabilized with Yttria or Niobium Pentoxide, or combinations thereof.

21. The process according to claim 15 or 17, **characterized in that** the jet mill at superheated temperature or steammill is adjusted with the following parameters: rotation of the air classifier at 20,000 rpm; compressed steam pressure at 50 bar; and temperature of the superheated fluid of 280°C.
